Europäisches Patentamt

European Patent Office

Office européen des brevets

(19)

(11) Veröffentlichungsnummer: **0 071 698**
**B1**

(12) **EUROPÄISCHE PATENTSCHRIFT**

(45) Veröffentlichungstag der Patentschrift: **30.09.87**

(21) Anmeldenummer: **82103325.5**

(22) Anmeldetag: **20.04.82**

(51) Int. Cl.⁴: **B 60 G 17/04,** B 60 K 5/12,
F 16 F 15/04

(54) Federelement und dessen Verwendung.

(30) Priorität: **04.08.81 DE 3130830**

(43) Veröffentlichungstag der Anmeldung:
**16.02.83 Patentblatt 83/07**

(45) Bekanntmachung des Hinweises auf die
Patenterteilung:
**30.09.87 Patentblatt 87/40**

(84) Benannte Vertragsstaaten:
**AT BE CH DE FR GB IT LI NL SE**

(56) Entgegenhaltungen:
**DE-A-1 555 349
DE-B-1 103 157
DE-B-1 505 427
DE-U-1 922 855
FR-A-1 150 957
FR-A-2 394 715
US-A-3 222 049**

(73) Patentinhaber: **WOCO Franz-Josef Wolf & Co.
Sprudelallee 19
D-6483 Bad Soden-Salmünster (DE)**

(72) Erfinder: **Wolf, Franz Josef
Sprudelallee 19
D-6483 Bad Soden-Salmünster (DE)**
Erfinder: **Pletsch, Hubert
Weinbergstrasse 37
D-6943 Birkenau (DE)**

(74) Vertreter: **Jaeger, Klaus, Dipl.-Chem. Dr. et al
JAEGER & PARTNER Patentanwälte Pippinplatz
4a
D-8035 Gauting (DE)**

Courier Press, Leamington Spa, England.

EP 0 071 698 B1

## Beschreibung

Die Erfindung betrifft ein selbsttätig und lastunabhängig niveauregulierendes Federelement der im Oberbegriff des Patentanspruchs 1 genannten Art.

Nach zuverlässigen, preiswerten und einfach gebauten selbsttätig niveauregulierenden Federelementen besteht auf den verschiedensten Gebieten der Technik seit längerer Zeit ein ständiger Bedarf. Solche Federelemente werden insbesondere, aber keinesfalls ausschließlich, in der Kraftfahrzeugindustrie benötigt. Von der Kraftfahrzeugindustrie werden solche Federelemente vor allem für die Radaufhängung und für die Montoraufhängung benötigt. Die aufwendige Bauweise solcher selbsttätig niveauregulierender Federelemente hat dazu geführt, daß solche Federelemente nur vereinzelt bei Fahrzeugen der obersten Preisklasse eingesetzt werden. Zudem weisen die bekannten Federelemente den Nachteil auf, nicht unbedingt lastunabhängig zu sein, es sei denn, die Federung wird von einer Zentralversorgung gesteuert. Dies bedeutet, daß für jeden verschiedenen Fahrzeugtyp unterschiedliche Federelemente bereitgehalten werden müssen. Dies verteuert nicht nur die Lagerhaltung des Fahrzeugherstellers, sondern auch die Lagerhaltung der Reparaturwerkstätten.

Speziell für die Motoraufhängung werden weiche, also flach verlaufende Federkennlinien von den zu verwendenden Federelementen gefordert. Die benötigten Federelemente müssen also bei vorbestimmter Belastung lange Federwege zur Verfügung stellen. Bei den heute gebräuchlicherweise verwendeten Gummifederelementen müssen diese Federelemente zur Erfüllung der vorstehend genannten Anforderungen relativ groß dimensioniert werden, um eine vertretbare Standzeit des Elastomers zu gewährleisten, also um zu verhindern, daß das Elastomer im Betrieb überlastet wird. Dabei wird jedoch gleichzeitig vom Anwender gefordert, daß solche Federelemente bei unterschiedlichen Belastungen, hier also bei unterschiedlich schweren Triebwerken für im Prinzip gleiche Fahrzeugtypen, annähernd gleiche Federsteifigkeit aufweisen. Die gummielastischen Federelemente sollen also bei prinzipiell gleicher Abmessung für unterschiedliche Belastungen gleiche weiche Federkenndaten aufweisen. Dieses Problem wird in der Praxis heute durch im wesentlichen identisch dimensionierte Gummifederelemente gelöst, für die Gummielemente mit jeweils unterschiedlichen Härten verwendet werden und die daher entsprechend der Belastung stark unterschiedliche Federkennungen aufweisen. Es liegt auf der Hand, daß eine solche Praxis nicht nur eine aufwendige Lagerhaltung erfordert, sondern auch zur zahlreichen Verwechslungen Anlaß gibt. Nicht selten sind schwerere Motoren auf zu weichen Federelementen gelagert worden bzw. sind umgekehrt leichte Motoren auf zu festen Federelementen aufgehängt worden.

Zur Verwendung als Axiallager zur Radaufhängung ist aus der französischen Patentschrift FR—A—1 150 957 ein lastunabhängig niveauregulierendes Federelement mit einer elastisch verformbaren und mit einem hydraulischen Fluid gefüllten Federkammer zum federnden Verbinden von zwei relativ zueinander beweglichen Teilen eines Kraftfahrzeugs bekannt, wobei das Federelement eine Pumpe für das hydraulische Fluid aufweist, deren Pumpengehäuse mit dem ersten Teil und deren Pumpenkolben mit dem zweiten Teil der Radaufhängung so in Verbindung stehen, daß die Pumpe durch die Relativbewegung zwischen den beiden gegeneinander zu federnden Teilen zur Ausführung alternierender Saugtakte und Drucktakte beaufschlagbar ist und daß die Stellung des Pumpenkolbens im Pumpengehäuse dem Abstand des ersten Teils vom zweiten Teil der Radaufhängung entspricht. Der Nachteil bei dem Federelement dieser Patenschrift ist zum einen, daß die Federsteifigkeit in Abhängigkeit von der Auflagelast variiert, und ist zum anderen, daß die konstruktive Auslegung als reines Axiallager den Anwendungsbereich stark einschränkt.

Angesichts dieses Standes der Technik liegt der Erfindung die Aufgabe zugrunde, ein selbsttätig und vor allem lastunabhängig niveauregulierendes Federelement mit beliebiger Verwendbarkeit, speziell jedoch für den Kraftfahrzeugbau und hier insbesondere für die Triebwerks- und die Radaufhängung zu schaffen, das trotz lastunabhängiger Niveauregulierung und etwa lastunabhängig gleicher weicher Federsteifgkeit und definierter Federwege sowie verbesserter Standzeit so preiswert ist, daß sein Mehrpreis gegenüber einfachen Gummifederelementen durch Einsparungen auf der Lagerhaltungsseite und der Reklamationsseite weit überkompensiert wird.

Zur Lösung dieser Aufgabe schafft die Erfindung ein selbsttätig lastunabhängig niveauregulierendes Federelement der eingangs genannten Art, das erfindungsgemäß die im kennzeichnenden Teil des Patentanspruchs 1 genannten Merkmale aufweist.

Das Federelement der Erfindung ist also wesentlich durch eine Trennung der Funktionen Federn und Pumpen gekennzeichnet. Sämtliche Federarbeit wird von der hydraulischen Federkammer übernommen, die von einer Pumpe hydraulisch beaufschlagt wird, die ihrerseits keinerlei Federfunktionen erfüllt. Dabei wird die Pumpe nicht durch fremde Energiequellen angetrieben, sondern durch die Relativbewegung beaufschlagt, die die beiden Teile gegeneinander ausführen, die durch die Federkammer gegeneinander abgefedert werden sollen. Diese Art des Antriebs der Pumpe wird dadurch erreicht, daß das Pumpengehäuse bzw, das Verdrängergehäuse mit einem der beiden gegeneinander abzufedernden Teile verbunden ist, während der Pumpenkolben am jeweils anderen Teil angelenkt ist. Diese Anlenkung kann dabei formschlüssig, beispielsweise über eine gelenkig angelenkte Kolbenstange, oder kraftschlüssig, beispielsweise unter Federbeaufschlagung des Pumpenkolbens und Anlage an einer Anschlagsfläche des abzufe-

derden Teils, erfolgen. Dabei dient eine solche Federbeaufschlagung des Pumpenkolbens jedoch lediglich dem Zweck, den Pumpenkolben stets in Anlage an eines der beiden gegeneinander abzufedernden Teile zu halten und dient nicht etwa dem Zweck der Abfederung dieses Teils.

Bei dieser Art der Ankopplung der Pumpe zwischen den beiden gegeneinander abzufedernden Teilen wird erreicht, daß die relative Stellung des Pumpenkolbens im Pumpen- bzw. Verdrängergehäuse der Pumpe stets dem Abstand der beiden gegeneinander abzufedernden Teile entspricht, im Sinne der Regelkreistheorie diesen Abstand also "abbildet". Durch die Freigabe einer Bypassleitung zum Vorratsbehälter des hydraulischen Fluids oberhalb einer bestimmten Grenzstellung, also oberhalb eines bestimmten Grenzabstandes der beiden gegeneinander abzufedernden Teile gegeneinander, erfolgt durch das Öffnen der Bypassleitung ein Abbau des Pumpdrucks.

Die Federkammer wird daher nicht weiter mit Druckfluid beaufschlagt, vermag also auch den Abstand der beiden gegeneinander abzufedernden Teile nicht weiter zu vergrößern. Dieser Abstand wird erst dann wieder vergrößert, wenn, beispielsweise durch das Auftreten von Leckstellen auf der Druckseite des hydraulischen Systems, eine Verminderung des Abstandes zwischen den beiden gegeneinander abzufedernden Teilen eintritt.

In der Praxis ist es dabei besonders vorteilhaft, wenn die Pumpe insgesamt innerhalb der Federkammer selbst angeordnet ist. Das gesamte System kann also durch die Federkammer hermetisch umschlossen werden. Vor allem in diesem Fall sind nach einer Ausgestaltung der Erfindung der zweite Verbindungskanal und das zweite Rückschlagventil vorzugsweise im pumpenkolben selbst, im Fall einer Kolbenschieberpumpe also in Kolbenschieber, ausgebildet.

Das Federelement kann sowohl in radialer als auch in axialer Bauweise ausgeführt sein. Die Begriffe "radial" bzw. "axial" beziehen sich dabei auf die Hauptkomponente der einwirkenden und abzufedernden Kräfte.

Der entscheidende Vorteil des selbsttätig niveauregulierenden Federelements der Erfindung liegt dabei darin, daß die Niveauregulierung in einem weiten Bereich weitgehend lastunabhängig arbeitet. Unabhängig davon, wie groß die abzufedernde Last ist, wird die Federkammer stets so hoch aufgepumpt, bis die Bypassleitung zur Vorratskammer im Pumpengehäuse freigegeben wird. Das Federelement weist daher exakt definierte Federwege auf. Mit anderen Worten, durch das Federelement der Erfindung kann bei identischer Ausbildung für unterschiedliche Lasten etwa gleiches Federverhalten und identische Niveauregulierung erzielt werden.

Da weiterhin die Federkammer durch den Aufpumpeffekt unterstützt und das federnde Material entlastet wird, kann bei Verwendung eines Elastomers als Werkstoff für die Federung der Federkammer eine Langzeitcharakteristik erzielt werden, die vom sogenannten "Setzverhalten" unabhängig ist, die also von der Materialermüdung und Überbeanspruchung des Materials. Die bei herkömmlichen Gummifederelementen häufig zu beobachten ist, unabhängig bleibt.

Das dämpfende Federelement, das auch als Federdämpfungselement bezeichnet werden kann, hat vor allen Dingen den Vorteil, daß bei stärker werdenden Stößen mit größerer Amplitude das Lager gegen den elastischen Anschlag anhebt, dadurch verhärtet und somit eine gewünschte Beruhigung der abzufedernden Massen gegen die nicht abgefederten Massen eintritt.

Das erfindungsgemäße Federelement stellt daher insgesamt gesehen ein hydrauslisch gedämpftes Lager dar.

In einem Ausführungsbeispiel, in dem die Pumpe im wesentlichen in der Vorratskammer angeordnet ist, wird eine Vereinfachung dahingehend erreicht, daß ein einziger Schrägkanal eine direkte Verbindung zwischen der Federkammer und der Dämpferkammer mit der Vorratskammer schafft. Durch eine ovalförmige Ausbildung der Öffnung des Schrägkanals zur Vorratskammer hin und die Querschnittskonfiguration dieses Schrägkanals werden Drosseleffekte erreicht, die die direkte Verbindung zulassen. Durch die Gestaltung des Pumpenkolbens mit einem größeren Zylinderdurchmesser zum Pumpenraum hin und einem kleineren Zylinderdurchmesser zum abgerundeten Kopfbereich hin ist es möglich, beim Saugtakt die direkte Verbindung zur Federkammer über die ovale Öffnung abzuschließen, so daß haydraulisches Fluid im wesentlichen allein aus der Vorratskammer angesaugt wird. Die Ausführungsform der Pumpe in der Vorratskammer gestattet es aber auch, die den Pumpenkolben beaufschlagende Feder mit schwächerer Federkraft zu wählen, da das Nachführen des Pumpenkolbens in der Vorratskammer leichter erfolgen kann. Auf Grund der direkten Anordnung der Pumpe in der Vorratskammer erübrigt sich ein Verbindungskanal im Sinne eines dritten Verbindungskanals, der in einer Zwischenphase des Hubes des Pumpenkolbens eine freie Verbindung zwischen Pumpenraum und Vorratskammer schaffte.

Die Erfindung ist im folgenden an Hand von Ausführungsbeispielen in Verbindung mit den Zeichnungen näher erläutert. Es zeigen:

Fig. 1 nach Art eines Blockschaltbildes in schematischer Darstellung das Grundprinzip des Federelements;

Fig. 2 ein Ausführungsbeispiel des Federelements im Axialschnitt;

Fig. 3 einen Schnitt nach III——III in Fig. 2;

Fig. 4 in vergrößerter Teildarstellung die in der Fig. 2 gezeigte Pumpe;

Fig. 5 in schematischer Darstellung einen Schnitt der in Fig. 3 gezeigten Art für ein modifiziertes Ausführungsbeispiel der Erfindung;

Fig. 6 in schematischer Darstellung und im senkrechten Axialschnitt ein weiteres Ausführungsbeispiel des Federelements; und

Fig. 7 ein weiteres Ausführungsbeispiel eines Federelementes im Axialschnitt mit in der Vorratskammer angeordneter Pumpe.

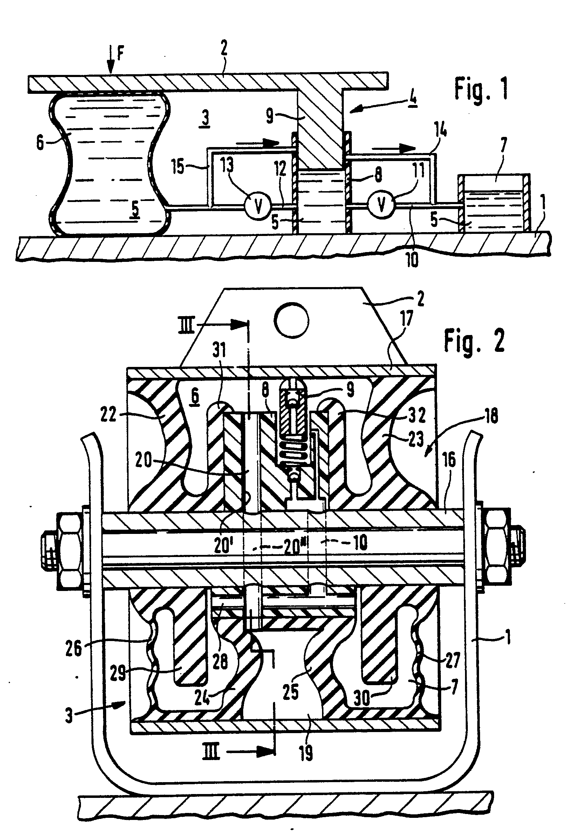

In der Prinzipskizze gemäß Fig. 1 sind ein erstes Teil 1 und ein zweites Teil 2, die in Richtung des Pfeiles F relativ gegeneinander beweglich sind, durch ein Federelement 3 bzw. Federdämpfungselement gegeneinander abgefedert, das im wesentlichen aus einer Pumpe 4 für ein hydraulisches Arbeitsfluid 5, einer Federkammer 6, die vollständig mit dem hydraulischen Fluid gefüllt ist, und einer Vorratskammer 7 besteht. Das hydraulische Fluid steht in der Vorratskammer 7 zumindest im wesentlichen unter Umgebungsdruck, ist also vom System aus gesehen zumindest im wesentlichen drucklos. In der Federkammer 6 steht das hydraulische Fluid 5 dagegen unter einem Druck, der im wesentlichen von der einwirkenden Last, das heißt, der auf die Federkammer einwirkenden Kraft F, abhängig ist. Beispielsweise liegt bei abzufedernden Kräften F in der Größenordnung von 0,3 bis 2 kN der Überdruck des hydraulischen Fluids 5 in der Federkammer 6 typischerweise im Bereich von ungefähr 1 bis 10 bar. Diese Daten sind jedoch vom Fachmann ohne weiteres je nach der zu lösenden Federungsaufgabe auch in anderer Weise einstellbar. Diese Einstellung kann beispielsweise durch die Wahl des Werkstoffes für die Wand der Federkammer 6 sowie durch entsprechende Formgebung der Federkammer erfolgen. Als Werkstoff für die Federkammer 6 wird vorzugsweise ein Elastomer bzw. ein korrosionsfester Federwerkstoff, gegebenenfalls auch in Verbindung mit dem Elastomer verwendet.

Das Verdränger- bzw. Pumpengehäuse 8 der in der Fig. 1 schematisch als Kolbenschieber dargestellten Pumpe 4 ist starr mit dem ersten Teil 1 verbunden. Der Pumpenkolben 9 ist in der in Fig. 1 dargestellten schematischen Prinzipskizze ebenfalls starr mit dem zweiten Tiel 2 verbunden. Bei einer Relativbewegung der beiden Tiele 1 und 2 in Richtung der Kraft F gegeneinander wird der Pumpenkolben 9 also im Pumpengehäuse 8 abwärts und aufwärts geführt. Dadurch führt die Pumpe 4 bei Annäherung der Teile 1 und 2 aneinander einen Drucktakt und bei Entfernung der beiden Teile 1 und 2 voneinander einen Saugtakt durch. Die Stellung des Pumpenkolbens 9 im Pumpengehäuse 8, das heißt in der Darstellung der Fig. 1 die Hubhöhe des Kolbens im Zylinder der Pumpe 4, entspricht dabei jederzeit eindeutig dem Abstand des Teiles 1 vom Tiel 2.

Insbesondere braucht der Pumpenkolben 9 nicht in der in Fig. 1 gezeigten Weise starr mit dem zweiten Teil 2 verbunden zu sein. Vielmehr ist erfindungswesentlich lediglich erforderlich, daß die Stellung des Pumpenkolbens 9 eindeutig durch die Lage des Teiles 2 bestimmt wird. Zu diesem Zweck kann der Pumpenkolben 9 auch gelenkig an das Teil 2 angekoppelt sein oder kann durch eine Druckfeder beaufschlagt sein, die den Pumpenkolben 9 ständig in Anlage an einer am Teil 2 ausgebildeten Anschlagfläche hält.

Die Pumpe 4 ist über einen ersten Verbindungskanal 10 mit der Vorratskammer 7 verbunden. In dem ersten Verbindungskanal 10 ist ein erstes Rückschlagventil 11 eingeschaltet, das beim Saugtakt der Pumpe 4 öffnet, so daß die Pumpe 4 das Fluid 5 aus der Vorratskammer 7 ansaugt, und beim Drucktakt der Pumpe 4 schließt.

Die Pumpe 4 ist weiterhin über einen zweiten Verbindungskanal 12 mit der Federkammer 6 verbunden. In den zweiten Verbindungskanal 12 ist ein zweites Rückschlagventil 13 eingeschaltet, das beim Drucktakt der Pumpe 4 öffnet und sowohl bei Ruhestellung der Pumpe 4 als auch beim Suagtakt der Pumpe 4 geschlossen ist. Beim Drucktakt der Pumpe 4 kann hydraulisches Fluid 5 aus der Pumpe 4 über den zweiten Verbindungskanal 12 und das zweite Rückschlagventil 13 gegen das in der Federkammer 6 unter Überdruck stehende Fluids in die Federkammer 6 gepumpt werden.

Das in der Fig. 1 schematisch gezeigte Federelement 3 weist erfindungswesentlich weiterhin einen dritten Verbindungskanal 14 auf, der die Pumpe 4 frei mit der Vorratskammer 7 verbindet, wenn die sonst vom Pumpenkolben 9 der Pumpe 4 dicht verschlossene Mündung oder Öffnung des dritten Verbindungskanals 14 zum Pumpengehäuse 8 vom Pumpenkolben 9 freigegeben wird. Diese Freigabe des dritten Verbindungskanals 14 erfolgt dabei von einer vorbestimmten Stellung des Pumpenkolbens 9 im Pumpengehäuse 8 an, die einem bestimmten vorgegebenen Abstand des Teiles 1 vom Teil 2 entspricht. In diesem Fall wird also bei einem Aufeinanderzubewegen der Teile 1 und 2, d.h. bei einem Einführen des Pumpenkolbens 9 in das Pumpengehäuse 8, das Druckfluid 5 praktisch widerstandslos über den dritten Verbindungskanal 14 in die Vorratskammer 7 zurückgeführt und wird in dem zweiten Verbindungskanal 12 kein ausreichend hoher Druck mehr erzeugt, um das zweite Rückschlagventil 13 zu öffnen. Erst wenn sich die beiden gegeneinander abgefederten Teile 1 und 2 wieder so weit genähert haben, daß der Pumpenkolben 9 die Öffnung des dritten Verbindungskanals 14 im Pumpengehäuse 8 wieder verschließt, wird bei weiterer Annäherung der Teile 1 und 2 gegeneinander in dem zweiten Verbindungskanal 12 wiederum durch die oszillierende Bewegung des Pumpenkolbens 9 ein Fluiddruck erzeugt, der das Rückschlagventil 13 öffnet, so daß erneut unter Überdruck stehendes Fluid 5 in die Federkammer 6 gedrückt wird. Dadurch wird die der Kraft F entgegenwirkende Federkraft der Federkammer 6 vergrößert, wird also auch der Abstand der Teile 1 und 2 voneinander vergrößert. Dadurch wiederum wird auch der Pumpenkolben 9 im Pumpengehäuse 8 wiederum angehoben, und zwar solange, bis wiederum der dritte Verbindungskanal 14 freigegeben wird. Auf diese Weise arbeitet das in der Fig. 1 schematisch dargestellte Federelement 3 unabhängig von der Größe der einwirkenden Last oder Kraft F selbsttätig niveauregulierend. Weiterhin ist ohne weiteres ersichtlich, daß der durch größere Kräfte F in der Federkammer 6 erzeugte Überdruck des Arbeitsfluids 5 größer ist als für kleinere Belastungen des Federelements 3, also bei kleineren einwirkenden Kräften F. Mit anderen Worten, das selbsttättig niveauregulierende Federelement 3 weist also auch bei unterschiedlichen Belastungen eine zumindest annähernd gleiche Federsteifigkeit, das heißt Steigung der Federkennlinie, auf.

Das Federelement 3 weist in der in Fig. 1 dargestellten Art einen vierten Verbindungskanal 15 auf, der die Pumpe 4, genauer gesagt das Pumpengehäuse 8 der Pumpe 4, frei mit der Federkammer 6 verbindet, wenn die sonst vom Pumpenkolben 9 der Pumpe 4 dicht verschlossene Öffnung des vierten Verbindungskanals 15 zum Pumpengehäuse 8 von einer bestimmten Stellung des Pumpenkolbens 9 im Pumpengehäuse 8 freigegeben wird, und zwar erst nach Freigabe oder zumindest nach Beginn der Freigabe der Öffnung des dritten Verbindungskanals 14 zum Pumpengehäuse 8 durch den Pumpenkörper 9. Dies ist in der Fig. 1 schematisch dadurch angedeutet, daß der vierte Verbindungskanal 15 etwas oberhalb des dritten Verbindungskanals 14 in das Pumpengehäuse 8 der Pumpe 4 mündet.

In den Figuren 2, 3 und 4 ist in schematischer Darstellung ein erstes Ausführungsbeispiel der Erfindung gezeigt. Dabei sind zum besseren Verständnis in den Figuren 2 bis 4 für jeweils funktionsgleiche Elemente die gleichen Bezugszeichen und die gleichen Bezeichnungen wie in der Fig. 1 verwendet.

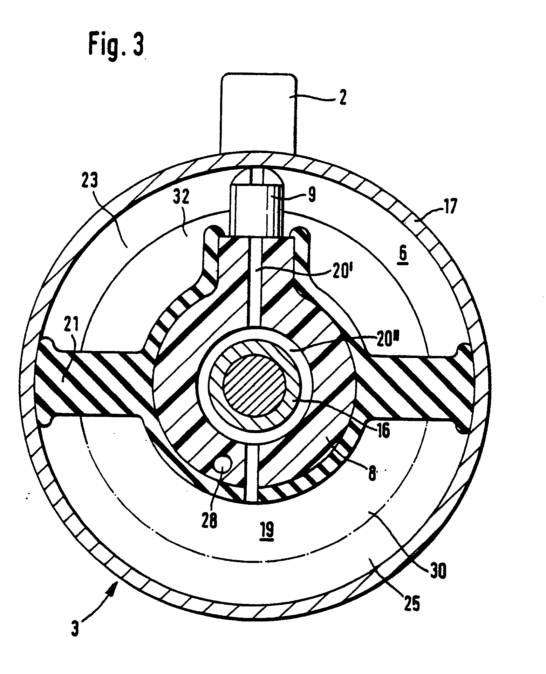

Das in der Fig. 2 gezeigte Federelement 3 besteht im wesentlichen aus einer inneren Stahlhülse 16, mit der das erste Teil 1, beispielsweise das Chassis eines Kraftfahrzeugs, starr verbunden ist, aus einer äußeren Stahlhülse 17, mit der das zweite Teil 2, beispielsweise ein Motorblockträger eines Kraftfahrzeugs, starr verbunden ist, und aus einem Elastomereinsatz 18, der zwischen der inneren Stahlhülse 16 und der äußeren Stahlhülse 17 angeordnet ist. In dem Elastomereinsatz 18 sind eine Federkammer 6, eine Vorratskammer 7 und eine Dämpferkammer 19 ausgebildet. Die Federkammer 6 und die Dämpferkammer 19 sind durch einen Drosselkanal 20 miteinander verbunden, der zum Teil als Bohrung 20' im Pumpengehäuse 8 und zum Teil als Ringnut 20'' in der inneren Stahlhülse 16 ausgebildet ist. Die Federkammer 6 und die Dämpferkammer 19 sind durch eine horizontale Trennwand 21 (Fig. 3) voneinander getrennt. Sowohl die in radialer Richtung gesehene Außenwand der Federkammer 6 als auch die in radialer Richtung gesehene Außenwand der Dämpferkammer 19 werden von der Innenwand der äußeren Stahlhülse 17 gebildet. Zu diesem Zweck ist der Elastomereinsatz 18 druckdicht mit der Innenwand der Stahlhülse 17 verbunden, beispielsw. durch Verspannen, Verkleben und/oder Anvulkanisieren. Die Wandfläche, mit der die Stahlhülse 17 die Federkammer 6 mitbegrenzt, ist wesentlich größer, vorzugsweise um den Faktor 2 bis 10 größer, als die Wandfläche, mit der dieselbe äußere Stahlhülse 17 begrenzender Wandungsteil der Dämpfungskammer 19 ist. Dadurch ist trotz des freien Kommunizierens der Federkammer 6 mit der Dämpferkammer 19 über den Drosselkanal 20 die niveauregulierende Abhebbarkeit des Federelements 3 erhalten geblieben.

Wahrend die Federkammer 6 mit steifen, verstärkten und federnden Membranwänden 22, 23 und die Dämpferkammer 19 mit vergleichbar starken oder nur geringfügig schwächeren Membranwänden 24, 25 aus dem Elastomer des Elastomereinsatzes 18 versehen sind, ist die Vorratskammer 7 von nur relativ dünnen und praktisch widerstandslos verformbaren Membranwänden 26, 27 begrenzt. Dabei ist die Vorratskammer 7 axial zu beiden Seiten der Dämpfungskammer 19 ausgebildet. Die beiden Teil der Vorratskammer 7 stehen durch einen Verbindungskanal 28, der als Bohrung im Pumpengehäuse 8 ausgebildet ist, in freier Verbindung miteinander.

Im Elastomereinsatz 18 sind weiterhin Puffer oder Anschläge 29, 30 ausgebildet, die den Rückfederweg begrenzen sowie Puffer oder Anschläge 31, 32 ausgebildet, die den Durchfederweg begrenzen und dabei sowohl die Funktion von Notanschlägen asl auch die Funktion lastaufnehmender Widerlager bei Druckverlust in der Federkammer 6 erfüllen.

Das Pumpengehäuse 8 besteht aus Kunststoff und Leichtmetall z.B. Druckguß und ist thermisch auf die innere Stahlhülse 16 aufgeschrumpft. In der aus Fig. 2 ersichtlichen Weise ist dabei der erste Verbindungskanal 10 teils als Ringnut in der inneren Stahlhülse 16, teils als Bohrung im Pumpengehäuse 8 ausgebildet.

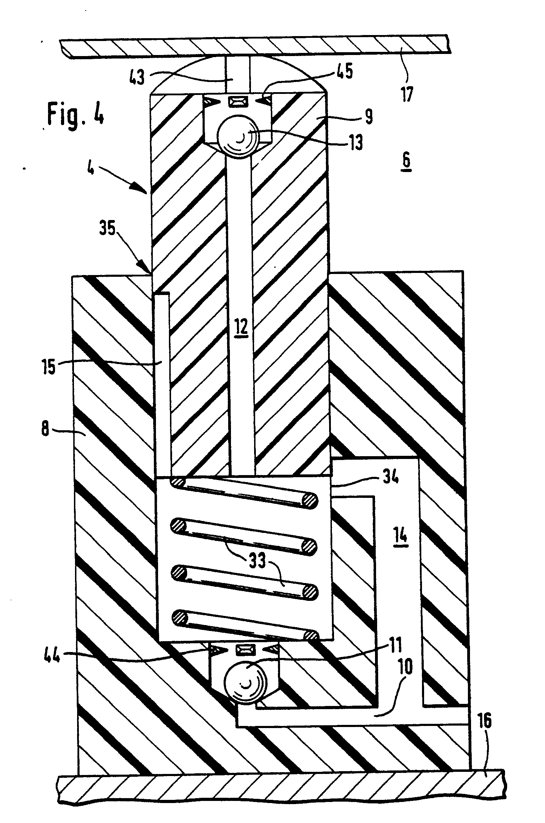

Die Pumpe 4 ist in der Fig. 4 in vergrößerter schematischer Darstellung gezeigt. Die Pumpe 4 ist als Kolbenschieberpumpe ausgebildet. Der Pumpenkolben 9 der Pumpe 4, der einen Verdrängerkörper bildet, ist durch eine Druckfeder 33 in der Darstellung der Fig. 4 aufwärts beaufschlagt und wird so stets an der Innenwand der äußeren Stahlhülse 17 in Anlage gehalten. Der Pumpenkolben 9 ist mit einer durchgehenden beidseitig offenen Bohrung versehen, die den zweiten Verbindungskanal 12 bildet. In diesem zweiten Verbindungskanal 12, der Druckleitung der Pumpe, ist das zweite Rückschlagventil 13 als Kugelventil ausgebildet. Das Kugelrückschlagventil kann dabei sowohl als reines Schwerkraftventil als auch als federbeaufschlagtes Ventil oder in anderer Weise ausgebildet sein.

Ein Kreuzschlitz 43 im Kopf des Pumpenkolbens 9 sorgt dabei für eine freie Fluidverbindung zwischen dem zweiten Verbindungskanal 12 und der Federkammer 6.

Auch das erste Rückschlagventil 11, das in den ersten Verbindungskanal 10, die Saugleitung der Pumpe, eingeschaltet ist, ist als Kugelventil ausgebildet. Der dritte Verbindungskanal 14 ist in der aus Fig. 4 ersichtlichen Weise als Bohrung im Pumpengehäuse 8 ausgebildet. Schließlich ist der vierte Verbindungskanal 15 als Nut im Mantel des Pumpenkolbens 9 ausgebildet, die bei Normalbetrieb vom Pumpengehäuse 8 gegenüber der Federkammer 6 verschlossen ist.

In der Darstellung der Fig. 4 ist eine Stellung des Pumpenkolbens 9 im Pumpengehäuse 8 gezeigt, bei der gerade die Öffnung 34 des dritten Verbindungskanals 14 freigegeben ist, während die Öffnung 35 des vierten Verbindungskanals 15, des Sicherheitskanals, gerade noch verschlossen ist. Bewirkt ein schlagartiges Durchfedern ein rasches Niederdrücken des Pumpenkolbens 9 im Pumpengehäuse 8, so kann durch ein rasches Verschließen der Öffnung 34 des dritten Verbindungskanals 14 über den zweiten Verbindungskanal 12 und das zweite Rückschlagventil 13 ein weiteres Aufpumpen der Federkammer 6 bewirkt werden. Beim Rückstellvorgang wird dann jedoch der Pumpenkolben 9 im Pumpengehäuse 8 soweit angehoben, daß der vierte Verbindungskanal 15, nämlich die im Pumpenkolben 9 ausgefräste Nut mit ihrer Oberkante freigegeben wird, also die Öffnung 35 freigegeben wird. Dadurch kann das unter Überdruck stehende Fluid aus der Federkammer 6 durch die Öffnung 35 über den vierten Verbindungskanal 15 durch das Pumpengehäuse 8 und über den dritten Verbindungskanal 14 frei in die Vorratskammer 7 zurückströmen. Dieser Rückfluß erfolgt dabei solange, bis durch das Absinken der belasteten äußeren Stahlhülse 17 und damit das Niederdrücken des Pumpenkolbens 9 im Pumpengehäuse 8 die Öffnung 35 wieder verschlossen wird.

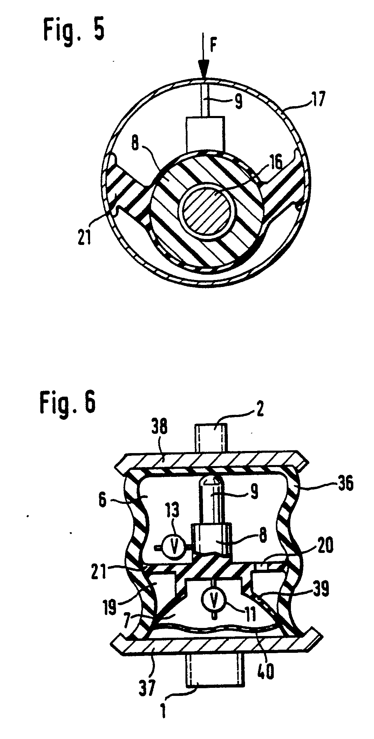

Bei der in Fig. 3 gezeigten Darstellung des Federelements 3 sind die innere Stahlhülse 16 und die äußere Stahlhülse 17 bei unbelastetem Federelement konzentrisch zueinander angeordnet. Ein modifiziertes Ausführungsbeispiel ist schematisch in der Fig. 5 gezeigt. Im unbelasteten Zustand sind die innere Stahlhülse 16 und die äußere Stahlhülse 17 nicht koaxial zueinander angeordnet. Der koaxiale Zustand wird erst dann eingestellt, wenn bei ortsfest unterstützter innerer Stahlhülse 16 auf die äußere Stahlhülse 17 eine abwärts gerichtete Kraft F einwirkt. Auf diese Weise kann erzielt werden, daß bei ruhender Sollbelastung des Federelements 3 die gegeneinander verschiebbaren Ankopplungsteile des Federelements, nämlich die Stahlhülsen 16 und 17, zumindest im wesentlichen koaxial zueinander liegen. Wird dagegen bei dem in Fig. 3 gezeigten Ausführungsbeispiel bei ortsfest unterstützter innerer Stahlhülse 16 die äußere Stahlhülse 17 abwärts gerichtet belastet, so ist die Achse der inneren Stahlhülse 16 bereits in Ruhelage gegenüber der Achse der äußeren Stahlhülse 17 nach oben verschoben. Dieser Verschiebung der "Nullinie" des Federelements kann durch eine Verschiebung der Achsen der Hülsen 16 und 17 gegeneinander in der aus Fig. 5 ersichtlichen Weise vorspannend vorgebeugt werden.

Ein weiteres Ausführungsbeispiel der Erfindung ist schließlich schematisch in der Fig. 6 angedeutet. Während das in der Fig. 2 gezeigte Federelement als "Radiallager" bezeichnet werden kann, ist das in Fig. 6 gezeigte Federelement seiner Ausgestaltung nach als "Axiallager" zu bezeichnen. Das Teil 1, beispielsweise das Chassis eines Kraftfahrzeugs, ist an einem beispielsweise als Stahlpfanne ausgebildeten Boden 37 eines Gummibalges 36 befestigt, während das zweite Teil 2, beispielsweise der Motorblock eines Kraftfahrzeugs, an einer oberen Stahlpfanne 38 befestigt ist, die im oberen Bereich eines Gummibalges 36 befestigt ist. Das Pumpengehäuse 8 ist über eine als Halbkugel ausgebildete Kuppel 39 am Boden 37 des Federelements 3 abgestützt. Unter dieser Kuppel ist eine durch eine leicht verformbare Membran 40 begrenzte Vorratskammer 7 ausgebildet. Pumpengehäuse 8, Trennwand 21 und Halbkugel 39 bilden eine Einheit aus Stahl, Leichtmetall oder Kunststoff. In der Trennwand 21, die die Federkammer 6 von einer kleineren Federkammer 19 trennt, ist ein Drosselkanal 20 ausgebildet. Im übrigen arbeitet auch das in der Fig. 6 gezeigte Ausführungsbeispiel des Federelements in gleicher Weise wie vorstehend für die anderen Ausführungsbeispiele ausführlich beschrieben.

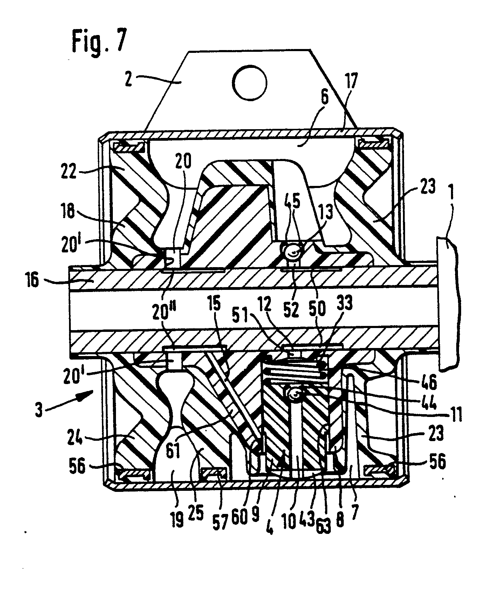

In Fig. 7 ist ein weiteres Ausführungsbeispiel des lastunabhängig niveauregulierenden Federelements gezeigt, das einen ähnlichen Aufbau wie das Federelement nach Fig. 2 hat. Auch bei diesem Ausführungsbeispiel sind übereinstimmende Bezugszeichen mit den vorausgehend beschriebenen Federelementen einheitlich gewählt.

Die Anbringung dieses Federelements 3 entspricht dabei der in Fig. 2 gezeigten Art und Weise. Dementsprechend ist die äußere Stahlhülse 17 fest mit dem Motorblockträger 2 verbunden, während die innere Stahlhülse 16 ähnlich wie nach Fig. 2 fest mit dem Chassis des Kraftfahrzeugs verbunden wird. Der gravierende Unterschied zum Ausführungsbeispiel nach Fig. 2 besteht beim Beispiel nach Fig. 7 darin, daß die Pumpe 4 in der Vorratskammer 7 anstatt in der Federkammer 6 angeordnet ist. Die koaxial zur inneren Stahlhülse 16 ausgerichtete äußere Stahlhülse 17, die den gesamten Elastomereinsatz 18 einschließlich Pumpengehäuse 8, Pumpenkolben 9 und die zwischen dem Elastomereinsatz 18 und dessen radialer Innenwand gebildeten Fluidkammern umschließt, ist an den axialen Enden etwas nach radial innen gebogen, um eine zuverlässigere Anordnung des Elastomereinsatzes 18 in der äußeren Stahlhülse 17 zu gewährleisten. Der Elastomereinsatz 18 umschließt einen Käfig, der vorzugsweise aus Stahl, Leichtmetall oder Kunststoff gefertigt ist und der den Elastomereinsatz 18 mindestens an den axialen Bereichen radial gegen die Innenwandung der äußeren Stahlhülse 17 spannt.

Der Käfig für den Elastomereinsatz 18 ist von seiner Gundstruktur mit zwei äußeren Käfigringen 56 konstruiert, die im Schnitt nach Fig. 7 im Bereich der inneren Stahlhülse 16 durch axial orientierte Verbindungsstege, jedoch mit gleichem Radius wie die äußeren Käfigringe 56, verbunden sind. Zusätzlich zu den äußeren Käfigringen 56 ist im unteren Bereich des Käfigs ein weiterer Halbring 57 vorgesehen, der ebenfalls mit den axial verlaufenden beiden äußeren Verbindungsstegen der äußeren Käfigringe 56 fest verbunden ist. Axial gesehen ist der Halbring 57 mittig versetzt angeordnet, vorzugsweise etwa mit einer Unterteilung des axialen Abstandes zwischen den beiden äußeren Käfigringen von 1/3:2/3. Im größeren Zwischenraum, der im Ausführungsbeispiel nach Fig. 7 zwischen dem rechten äußeren Käfigring 56 und dem Halbring 57 gebildet ist, ist die Vorratskammer 7 mit Teilen des Pumpengehäuses 8 und dem Pumpenkolben 9 angeordnet.

Die Käfigringe 56 und 57 weisen im Schnitt ein relativ flaches, nach radial außen gerichtetes U-Profil auf. Das auf der inneren Stahlhülse 16 angeordnete Pumpengehäuse 8, das im Regelfall aus Kunststoff oder Leichtmetall besteht und thermisch auf die innere Stahlhülse 16 aufgeschrumpft ist, wird, abgesehen zon kleinen Öffnungsbereichen, ebenso wie der gesamte Käfig mit Elastomermaterial normalerweise umspritzt, so daß der gesamte Elastomereinsatz 18 integral mit Käfig und Pumpengehäuse 9 auf der inneren Stahlhülse 16 ausgebildet ist. Im Ausführungsbeispiel nach Fig. 7 reicht das Verspannen des Elastomereinsatzes 18 mittels seiner Käfigringe 56 und 57 aus, um eine feste, fluiddichte Anordnung innerhalb der äußeren Stahlhülse 17 zu gewährleisten.

Die im oberen Bereich des Federelements 3 oberhalb der inneren Stahlhülse 16 gebildete Federkammer 6 hat im Prinzip die Form eines umgedrehten, zur Achse zeigenden U. Der Innenbereich dieses U wird von dem den oberen Teil des Pumpengehäuses 8 umkliedenden Elastomermaterial ausgefüllt. Die Außenbereiche des umgekehrten U der Federkammer 6 werden von den Membranwänden 22 bzw. 23 gebildet.

Im unteren Bereich des Federelements 3 nach Fig. 7 ist im kleineren Zwischenraum zwischen dem linken Käfigring 56 und dem Halbring 57 die Dämpferkammer 19 geformt. Die Dämpferkammer 19 wird in axialer Richtung von den Membranwänden 24 bzw. 25 und nach radial außen durch die Innenwand der äußeren Stahlhülse 17 begrenzt. In Richtung zur inneren Stahlhülse 16 steht die Dämpferkammer 19 über eine Öffnung im Elastomereinsatz mit einer damit fluchtenden Bohrung 20' in Verbindung. Zu dieser unteren Bohrung 20' ist mit einer Versetzung um etwa 180° auch im oberen flach auslaufenden Teil des Pumpengehäuses 8 eine komplementäre Bohrung 20' vorgesehen. Übere diese Bohrungen 20' und entsprechende Öffnungen im Elastomer stehen die Federkammer 6 und die Dämpferkammer 19 über eine flache, sich in axialer Richtung im Bereich der Bohrungen 20' erstreckenden Ringnut 20'' in Fluidverbindung. Die Bohrungen 20' und die Ringnut 20'' bilden zusammen einen Drosselkanal.

Die Wandungsteile der Dämpferkammer 19 sind ähnlich wie die äußeren Membranwände 22, 23 mit einer relativ großen Wandstärke ausgebildet, so daß einwirkende Kräfte nicht nur eine Fluiddämpfung, sondern auch eine Dämpfung durch den Elastomereinsatz 18 selbst erfahren. Die nach innen gebogenen Membranwände 22, 23, 24 und 25 bezwecken bei alternierenden Bewegungen des Federelements ein zusätzliches Verkleinern bzw. Vergrößern der Fluidkammern, so daß die Druckdifferenz nicht nur durch Überdruck in einer der Fluidkammern sondern auch durch Unterdruck in der entgegengesetzten Kammer gebildet wird.

Im größeren Zwischenraum zwischen dem rechten äußeren Käfigring 56 und dem Halbring 57 ist nach Fig. 7 der untere Teil des den Pumpenkolben 9 führenden Pumpengehäuses 8 vorgesehen. In radialer Richtung gesehen, das heißt zwischen der Außenwandung der inneren Stahlhülse 16 und der Innenwandung der äußeren Stahlhülse 17, erstreckt sich das Pumpengehäuse 8 etwa über 3/4 dieses Abstandes. Das den Pumpenkolben 9 führende Teil des Pumpengehäuses 8 ist im Prinzip hohlzylinderförmig gestaltet und ragt vom flachen Axialbereich des Pumpengehäuses 8 im wesentlichen senkrecht nach unten. In diesem Hohlzylinder 63 wird der Pumpenkolben 9 durch eine am axialen Teil des Pumpengehäuses 8 und nach Fig. 7 am oberen Bereich des Pumpenkolbens 9 angreifende Feder 33 gegen die untere Innenwandung der äußeren Stahlhülse 17 vorgespannt. In gleicher Weise wie nach Fig. 4 weist der Pumpenkolben 9 am abgerundet ausgebildeten Kopfbereich einen Kreuzschlitz 43 auf. In Bewegungsrichtung des Pumpenkolbens 9 ist mittig der erste Verbindungskanal 10 vorgesehen, der über ein daran anschließendes erstes Rückschlagventil 11 mit dem eigentlichen Pumpenraum 46 in Verbindung steht.

Während das mit einer Kugel ausgestaltete Rückschlagventil 11 den abdichtenden Ventilsitz in Richtung zum Kreuzschlitz 43 aufweist, sind im oberen Bereich nasenartige Vorsprünge 44 vorgesehen, die bei einem Saugtakt des Pumpenkolbens 9 das Schliessen des Rückschlagventils nach oben und ein Herausfallen der Kugel verhindern.

Der Pumpenkolben 9, der im Hohlzylinder des Pumpengehäuses 8 abdichtend verschiebbar angeordnet ist, geht etwa in der Mitte seiner vertikalen Längserstreckung stufenartig in einen Zylinderbereich über, der einen geringfügig kleineren Durchmesser aufweist als der zur Feder 33 zeigende Bereich.

In Richtung zur Dämpferkammer 19 hin ist der Hohlzylinder 63 des Pumpengehäuses 8 in einer Art Dreiecksteg 61 mit dem axialverlaufenden Bereich des Pumpengehäuses 8 verbunden. In diesem Steg 61 verläuft ein Schrägkanal, vorzugsweise unter einem Winkel von etwa 60° zur Achse der inneren Stahlhülse 16, der als weiterer Verbindungskanal 15 eine Fluidverbindung zwischen der Vorratskammer 7 und der Dämpferkammer 19 bzw. der Federkammer 6 gestattet. Zur inneren Stahlhülse 16 hin mündet dieser Verbindungskanal 15 in die Ringnut 20''. In Richtung zum Pumpenkolben 9 hin mündet der Verbindungskanal 15 über eine länglich ovale, insbesondere elliptische Öffnung 60 durch den Hohlzylinder 63 in die Vorratskammer 7.

Der Pumpenraum 46 steht über eine im axialen Bereich des Pumpengehäuses 8 vorgesehene Öffnung 51 mit einer in der inneren Stahlhülse 16 ausgebildeten Ringnut 50 in Verbindung. Komple-

mentär zu dieser Öffnung 51 ist auch der obere Teil des Pumpengehäuses 8 mit einer Öffnung 52 versehen, an die sich nach oben gesehen das Rückschlagventil 13 anschließt. Der obere Bereich des Rückschlagventils 13 ist in etwa gleicher Ausbildung wie das Rückschlagventil 11 mit nasenartigen Vorsprüngen 45 ausgestattet, so daß eine Fluid sperrung in einer Richtung nach oben zur Federkammer 6 und ein Herausfallen verhindert wird. Der obere Bereich des Rückschlagventils 13 mündet direkt in die Federkammer 6.

Im Bereich der Vorratskammer 7 bzw. des Hohlzylinders 63 ist der Elastomereinsatz 18 in einer Art Verlängerung des Hohlzylinders nach unten ausgebildet. Diese Verlängerung endet etwa im Bereich des Kreuzschlitzes 43 und läßt einen Spaltbereich zur Innenwand der äußeren Stahlhülse 17 frei.

Die Gesamtfunktion des Federelements 3 nach Fig. 7 entspricht dem nach Figuren 1 und 2 beschreibenden Federelement. Einzelfunktionen, zum Beispiel der Rückschlagventile, sind jedoch unterschiedlich. Betrachtet man eine etwa senkrecht zur Achse der inneren Stahlhülse 16 am Motorblockträger angreifende Kraft F, so bewirkt diese eine Abstandsänderung zwischen der inneren Stahlhülse 16 und der äußeren Stahlhülse 17 im unteren Teil des Federelements 3. Bei einer Vergrößerung dieses Abstandes wird demzufolge der Pumpenkolben 9 über die Feder 46 entsprechend dem sich verändernden Abstand zwischen den beiden Stahlhülsen 16 und 17 nachgeführt. Das bedeutet zunächst einen Saugtakt, wobei über den Kreuzschlitz 43 und den damit kommunizierenden ersten Verbindungskanal 10 bei geöffnetem ersten Rückschlagventil 11 Fluid in den Pumpenraum 46 angesaugt wird. Bei einem derartigen Hub des Pumpenkolbens 9 nach unten wird die Öffnung 60 des Verbindungskanals 15 durch den Pumpenkörper abgeschlossen. Während des Saugtaktes gelangt die Kugel des Rückschlagventils 11 in Anlage mit den Vorsprüngen 44 so daß das hydraulische Fluid in den Pumpenraum 46 gelangen kann. Während des Saugtaktes bleibt das zweite Rückschlagventil 13 geschlossen, das heißt in seiner unteren Lage.

Bei Beginn der Gegenbewegung in der Form der Bewegung des unteren Teils der äußeren Stahlhülse 17 gegen die innere Stahlhülse 16 schließt das erste Rückschlagventil 11, während das zweite Rückschlagventil 13 öffnet. Ein Tiel des im Pumpenraum 46 vorhandenen hydraulischen Fluids wird durch den Pumpenkolben 9 über die Öffnungen 51 und 52 und die Ringnut 50 in die Federkammer 6. gedrückt. Zwar besteht eine geringfügige direkte Fluidverbindung zwischen der Federkammer 6 und der Dämpferkammer 19 über die Ringnut 20" und den schrägverlaufenden Verbindungskanal 15 mit der Vorratskammer 7. Auf Grund des Querschnitts des Verbindungskanals 15 und der länglich ovalen Öffnung 60 wird jedoch ein derartiger Drosseleffekt des hydraulischen Fluids erreicht, daß diese direkte Fluidbeeinflussung in der Gesamtfunktion des Federelements unberücksichtigt bleiben kann.

## Patentansprüche

1. Selbsttätig lastunabhängig niveauregulierendes Federelement (3) mit einer elastisch verformbaren und mit einem hyraulischen Fluid (5) gefüllten Federkammer (6), einer Vorratskammer und einer Dämpferkammer zum federnden Verbinden von einem ersten (1) und einem zweiten (2) von zwei relativ zueinander beweglichen Teilen, insbesondere Teilen eines Kraftfahrzeugs, mit einer Pumpe (4) für das hydraulische Fluid (5), deren Pumpengehäuse (8) mit dem ersten Teil (1) und deren Pumpenkolben (9) mit dem zweiten Teil (2) so in Verbindung stehen, daß die Pumpe (4) durch die Relativbewegung zwischen den beiden gegeneinander zu federnden Teilen (1, 2) zur Ausführung alternierender Saugtakte und Drucktakte beaufschlagbar ist und daß die Stellung des Pumpnekolbens (9) im Pumpengehäuse (8) dem Abstand des ersten Teils (1) vom zweiten Teil (2) entspricht, dadurch gekennzeichnet, daß die Federkammer (6) und die Vorratskammer (7) sowie gegebenenfalls die Dämpferkammer (19) in einem Elastomereinsatz (18) ausgebildet sind, der zwischen einer inneren Stahlhülse (16), die mit dem ersten Teil (1) starr verbindbar ist, und einer äußeren Stahlhülse (17), die mit dem zweiten Teil (2) starr verbindbar ist, angeordnet ist.

2. Federelement nach Anspruch 1, gekennzeichnet durch einen Verbindungskanal (14), der die Pumpe (4) frei mit der Vorratskammer (7) verbindet, wenn die sonst vom Pumpenkolben (9) der Pumpe (4) dicht verschlossene Öffnung (34) des Verbindungskanals (14) zum Pumpengehäuse (8) von einer bestimmten Stellung des Pumpenkolbens (9) im Pumpengehäuse (8) an freigegeben wird.

3. Federelement nach Anspruch 2, gekennzeichnet durch einen weiteren Verbindungskanal (15), der die Pumpe (4) frei mit der Federkammer (6) verbindet, wenn die sonst vom Pumpenkolben (9) der Pumpe (4) dicht verschlossene Öffnung (35) des weiteren Verbindungskanals (15) zum Pumpengehäuse (8) von einer bestimmten Stellung des Pumpenkolbens (9) im Pumpengehäuse (8) an nach Freigabe oder zumindest nach Beginn der Freigabe der Öffnung (34) des Verbindungskanals (14) zum Pumpengehäuse (8) freigegeben wird.

4. Federelement nach einem der Ansprüche 1 bis 3, dadurch gekennzeichnet, daß die Pumpe (4) eine Kolbenschieberpumpe ist, deren Kolben (9) durch eine Feder (33) gegen einen Anschlag im zweiten Teil (2) gezwungen wird.

5. Federelement nach einem der Ansprüche 1 bis 4, dadurch gekennzeichnet, daß bei im wesentlichen in der Vorratskammer (7) angeordneter Pumpe (4) der erste Verbindungskanal (10) und das erste Rückschlagventil (11) im Pumpenkolben (9) ausgebildet sind, daß der weitere mindestens mit der Federkammer (6) in Fluidverbindung stehende Verbindungskanal (15) als Schrägkanal im Pumpengehäuse (8) mit länglicher Öffnung (60) in Richtung des Pumpenhubes zur Vorratskammer (17) gestaltet ist, und daß die Öffnung (60) gegenüber der Vorratskammer (7) bei einem Saugtakt des Pumpenkolbens (9) durch diesen abschließbar angeordnet ist.

6. Federelement nach einem der Ansprüche 1 bis 5, dadurch gekennzeichnet, daß die innere Stahlhülse (16) und die äußere Stahlhülse (18) bei nichtbelastetem Federelement (3) nicht koaxial zueinander sind, und zwar in dem Maße, daß sie bei bestimmungsgemäßer radialer Ruhebelastung des Federelements (3) zumindest im wesentlichen koaxial liegen.

7. Federelement nach einem der Ansprüche 1 bis 6, dadurch gekennzeichnet, daß die Federkammer (6) und die Vorratskammer (7) sowie gegebenen-falls die Dämpferkammer (19) rotationssysmme-trisch zu einer senkrechten Achse als Gummibalg (36) oder Federbalg ausgebildet sind, daß das erste Teil (1) am Boden (37) oder am Mantel des Balgens (36) angreift und daß das zweite Teil (2) am oberen Abschnitt (38) des Balges angreift.

8. Verwendung des Federelementes nach einem der Ansprüche 1 bis 7, zur federnden Aufhängung eines Drehwerks in Kraftfahrzeugen.

**Revendications**

1. Elément élastique (3) assurant le réglage d'un niveau automatiquement et indépendamment de la charge appliquée et comprenant une chambre élastique (6) déformable élastiquement et remplie d'un fluide hydraulique (5), une chambre constituant un réservoir et une chambre d'amortissement pour la liaison élastique entre une première (1) et une deuxième (2) partie d'un ensemble en deux parties qui peuvent se déplacer l'une par rapport à l'autre et font partie notamment d'un véhicule automobile, une pompe (4) pour le fluide hydraulique (5) dont l'enveloppe de pompe (8) est reliée à la première partie (1) et dont le piston de pompe (9) est relié à la deuxième partie (2) de telle manière que la pompe (4) est mise en action, par suite du déplacement relatif des deux parties (1, 2) reliées élastiquement, de manière à réaliser alternativement des opérations d'aspiration et de compression et que la position du piston de pompe (9) dans l'enveloppe de pompe (8) correspond à la distance entre la première partie (1) et la deuxième partie (2), caractérisé en ce que la chambre élastique (6) et la chambre (7) constituant le réservoir ainsi que, le cas échéant, la chambre d'amortissement (19) sont constituées par un élément d'insertion (18) en élastomère placé entre une enveloppe d'acier intérieure (16) qui peut être reliée rigidement à la première partie (1) et une enveloppe d'acier extérieure (17) qui peut être reliée rigidement à la deuxième partie (2).

2. Elément élastique selon la revendication 1, caractérisé en ce qu'il comporte un conduit de liaison (14) qui relie librement la pompe (4) à la chambre (7) constituant le réservoir lorsque l'orifice (34) du conduit de liaison (14) qui se trouve du côté de l'enveloppe de pompe (8) et qui normalement hermétiquement fermé par le piston (9) de la pompe (4) se trouve dégagé à partir d'une position déterminée du piston (9) dans l'enve-loppe (8).

3. Elément élastique selon la revendication 2, caractérisé en ce qu'il comporte un deuxième conduit de liaison (15) qui relie librement la pompe (4) à la chambre élastique (6) lorsque l'orifice (35) due deuxième conduit de liaison (15) qui se trouve du côté de l'enveloppe (8) de la pompe et qui normalement et hermétiquement fermé par le piston (9) de la pompe (4) se trouve dégagée à partir d'une certaine position du piston (9) dans l'enveloppe (8) après dégagement ou au moins après le début du dégagement de l'orifice (34) du conduit de liaison (14) qui se trouve du côté de l'enveloppe (8) de la pompe.

4. Elément élastique selon l'une des revendications 1 à 3, caractérisé en ce que la pompe (4) est une pompe à pistontiroir dont le piston (9) est poussé par un ressort (33) contre une butée ménagée dans la deuxième partie (2).

5. Elément élastique selon l'une des revendications 1 à 4, caractérisé en ce que, lorsque la pompe (4) est placée essentiellement dans la chambre (7) constituant le réservoir, le premier conduit de liaison (10) et la première soupape d'arrêt (11) se trouvent dans le piston (9), en ce que l'autre conduit de liaison (15) qui permet le passage du fluide au moins jusqu'à la chambre élastique (6) est un conduit oblique ménagé dans l'enveloppe (8) et comportant une ouverture allongée (60) dans la direction de la course de la pompe vers la chambre (7) constituant le réservoir et en ce que l'ouverture (60) en face de la chambre (7) constituant le réservoir est disposée de manière à être fermée par le piston (9) pendant la phase d'aspiration.

6. Elément élastique selon l'une des revendications 1 à 5, caractérisé en ce que, lorsque l'élément élastique (3) n'est soumis à aucune charge, l'enveloppe d'acier intérieure (16) et l'enveloppe d'acier (18) ne sont pas disposées coaxialement l'une par rapport à l'autre et que, lorsque l'élément élastique (3) est soumis à une charge stable radiale, elles sont au moins sensiblement disposées coaxialement.

7. Elément élastique selon l'une des revendications 1 à 6, caractérisé en ce que la chambre élastique (6) et la chambre (7) constituant le réservoir ainsi que, le cas échéant, la chambre d'amortissement (19) sont des solides de révolution autour d'un axe vertical et sont constituées par un soufflet en caoutchouc (36) ou un soufflet élastique, en ce que la première partie (1) agit sur le fond (37) ou sur l'enveloppe du soufflet (36) et en ce que la deuxième partie (2) agit sur le secteur supérieur (38) du soufflet.

8. Utilisation de l'élément élastique selon l'une des revendications 1 à 7 pour la suspension élastique d'un dispositif rotatif dans des véhicules automobiles.

**Claims**

1. A self-activated and load-independent level regulating spring elements (3) for connection between two relatively movable parts, especially parts of a motor vehicle, comprising a pump means (4) having a pump chamber (8) and a piston (9), said pump chamber (8) being connected to one of said parts (1), said piston (9) being operable in said pump chamber (8) and being engageable with the other of said parts (2) such that the relative axial position of said piston (9) in said pump chamber (8) corresponds to the relative position between said two parts (1, 2), an elastically deformable spring chamber (6) for containing a hydraulic fluid (5), a supply chamber (7) and a buffering chamber (19), characterized by said the spring chamber (6) and the supply chamber (7), respectively the buffering chamber (19), are formed in an elastomer insert (18) disposed between an inner metal sleeve (16) connected to said one-part (1) and an outer metal sleeve (17) connected to said other part (2).

2. A spring element according to claim 1, characterized by a passage way (14) between said pump chamber and said supply chamber, said passage way (14) leading to a first opening (34) in said pump chamber, said first opening (34) being at a position to be covered and uncovered by said piston (9) depending on the position of said piston (9) in said pump chamber (8), whereby the passage of fluid through said passage way (14) is controlled by the position of said piston (9) in said pump chamber (8).

3. A spring element according to claim 2, characterized by a further passage way (15) between said pump chamber (8) and said spring chamber (6), said passage way (15) leading to a second opening (35) in said pump chamber (8), said second opening (35) being at a position to be covered and uncovered by said piston (9) depending on the position of said piston (9) in said pump chamber (8), whereby the passage of fluid through said passage way (15) is controlled by the position of said piston (9) in said chamber (8), said second opening (35) being located relative to said first opening (34) is uncovered by said piston (9) before any part of said second opening (35) is uncovered by said piston (9).

4. A spring element according to one of the claims 1 to 3, characterized by that said piston (9) is axially slideable in said pump chamber, and further comprising biasing means biasing said piston (9) into engagement with said other part (2) by the force of spring element (33).

5. A spring element according to one of the claims 1 to 4, characterized by that said pump means (4) is disposed at least essentially within said supply chamber (7), that the first passageway (10) and the first control valve (11) are disposed in said piston (9), that said further passageway (15) being connected to the spring chamber (6) is obliquely disposed in said pump chamber (8) and comprises an oblong opening (60) to the supply chamber (7), and that said oblong opening (60) is closed by said piston (9) on a suction pulse of said pump means (4).

6. A spring element according to one of the claims 1 to 5, characterized by that said inner and outer sleeves (16, 18) are noncoaxially disposed when there is no applied load and are substantially coaxially disposed upon application of a neutral radial load on the spring element (3).

7. A spring element according to one of the claims 1 to 6, characterized by that said spring chamber (6) in said supply chamber (7), respectively the buffering chamber (19), are disposed rotationally symmetric about a longitudinal axis in the form of an elastomer bellows (36), that said first part (1) is attached to the lower end (37) or the outer surface of the bellows (36) and that said second part (2) is attached to the upper end (38) of the bellows.

8. The use of a spring element according to one of the claims 1 to 7 to provide elastical suspension of a driving mechanism within a motor vehicle.

Fig. 1

Fig. 2

# Fig. 3

Fig. 4

Fig. 5

Fig. 6

Fig. 7